# FASCICULE DE BREVET EUROPEEN

(11) **EP 4 103 829 B1**
(45) Date de publication et mention de la délivrance du brevet: **18.11.2026**
(21) Numéro de dépôt: 21707337.8
(22) Date de dépôt: 02.02.2021
(51) Int. Cl.: F02C 6/08, F02C 7/25, F02C 7/32, F02K 5/00, H02P 9/00

(54) **DISPOSITIF ET PROCEDE D'ARRET DE MACHINE ELECTRIQUE POUR UNE TURBOMACHINE**
VORRICHTUNG UND VERFAHREN ZUM ANHALTEN EINER ELEKTRISCHEN MASCHINE FÜR EINE TURBOMASCHINE
DEVICE AND METHOD FOR STOPPING AN ELECTRIC MACHINE FOR A TURBINE ENGINE

(30) Priorité: 10.02.2020 FR 2001300
(43) Date de publication de la demande: 21.12.2022
(73) Titulaire: SAFRAN, 75015 Paris (FR)
(72) Inventeur: JALJAL, Nawal, 77550 MOISSY-CRAMAYEL (FR)
(74) Mandataire: Cabinet Beau de Loménie
(86) Numéro de dépôt international: PCT/FR2021/050186
(87) Numéro de publication internationale: WO 2021/160952

(56) Documents cités:
- EP-A1- 3 618 263
- FR-A1- 3 079 361
- JP-A- 2019 037 096
- US-A1- 2019 097 479

## Description

### Domaine Technique

L'invention concerne le domaine des turbomachines. Plus précisément, l'invention concerne un dispositif pour arrêter une machine électrique d'une turbomachine d'aéronef, en cas de court-circuit, et un procédé utilisant un tel dispositif.

### Technique antérieure

Il est connu d'utiliser, pour des turbomachines aéronautiques notamment, des machines électriques synchrones à aimants permanents. Ces machines électriques peuvent être reliées à un ou plusieurs arbres de la turbomachine.

Les machines synchrones à aimant permanent, dites « MSAP », représentent une technologie avantageuse en termes de rendement, de densité massique et de dynamique de couple. Ces critères sont essentiels pour permettre un gain de performance avec l'électrification de la turbomachine.

Ces machines présentent néanmoins un défi important en termes de sécurité, en particulier dû au risque d'établissement de court-circuit et de départ feu. L'apparition d'un court-circuit dans le bobinage de la machine électrique peut être une conséquence de la dégradation de l'isolant du fait des conditions d'utilisation ou du vieillissement, notamment les hautes températures et/ou les surtensions. La dégradation de l'isolant combinée aux hautes altitudes implique l'apparition de décharges partielles qui dégradent encore plus l'isolant. Un arc électrique peut se créer avec un plasma conduisant au dépôt de matière et à l'apparition d'un court-circuit. Les courants très élevés peuvent également générer l'apparition de feu.

En outre, la MSAP ne peut pas être désexcitée tant que les aimants de la machine électrique, en tournant, continuent de générer un champ magnétique qui alimente le court-circuit. Or, le rotor de la machine électrique qui contient les aimants est généralement couplé à l'arbre de la turbomachine, rendant l'arrêt du court-circuit difficile.

Des dispositifs, tels que le découplage mécanique permettant de protéger contre les court-circuits d'une MSAP existent, mais sont souvent peu fiables et relativement chers, et présentent un encombrement important. Sur un système de type crabot par exemple, il faut réguler la machine électrique à couple nul ou très faible pour pouvoir découpler, ce qui est difficile à obtenir en cas de court-circuit. Un fusible de type mécanique permettant de casser la liaison mécanique au-delà d'un certain couple peut également être utilisé. Il faut cependant que le couple de court-circuit soit bien plus important que le couple maximal pour casser la liaison. Ce système est cher et peu fiable.

Les documents FR3079361 A1, US2019/097479 A1 et JP2019037096 A divulguent des dispositifs connus de l'art antérieur.

Il existe donc un besoin pour un dispositif permettant l'arrêt de machine électrique pour turbomachine en cas de court-circuit, à la fois efficace et peu encombrant, tout en assurant la tenue en température des équipements de la turbomachine.

### Exposé de l'invention

Le présent exposé concerne une turbomachine aéronautique telle que définie dans la revendication 1, et comprenant un ensemble électrique, l'ensemble électrique comprenant
- une machine électrique disposée dans la turbomachine et comprenant un stator et un rotor, le rotor étant solidaire en rotation d'un arbre de la turbomachine, et comprenant des aimants,
- un moyen de détection de court-circuit configuré pour détecter la présence d'un court-circuit dans la machine électrique,
- un moyen d'injection d'air chaud configuré pour prélever dans la turbomachine de l'air chaud à une température supérieure à la température de démagnétisation des aimants du rotor, et pour injecter l'air chaud prélevé sur les aimants dudit rotor lorsque le moyen de détection de court-circuit détecte la présence d'un court-circuit dans la machine électrique, et
- un moyen d'injection d'air froid, configuré pour prélever de l'air froid dans la turbomachine et pour l'injecter dans une enceinte interne de la turbomachine lorsque le moyen de détection de court-circuit détecte la présence d'un court-circuit dans la machine électrique, la température de l'air froid prélevé par le moyen d'injection d'air froid étant inférieure à la température de l'air chaud prélevé par le moyen d'injection d'air chaud.

La turbomachine comprend un ou plusieurs arbres en rotation. La machine électrique peut être disposée à différents endroits dans la turbomachine, en étant solidaire d'une partie tournante couplée mécaniquement à un des arbres. Par exemple, le rotor peut être monté directement autour de l'arbre ou couplé à un module de la turbomachine en rotation (compresseurs, turbines, réducteur). Le stator peut être fixé à un carter fixe de la turbomachine, et le rotor est solidaire en rotation d'un arbre de la turbomachine, par exemple l'arbre basse pression ou l'arbre haute pression. Le bobinage présent dans le stator, et les aimants présents dans le rotor permettent, lors de la rotation du rotor, de créer un courant électrique. Ce courant électrique généré peut notamment permettre d'alimenter un boitier d'électronique de puissance présent dans la turbomachine. L'effet inverse, c'est-à-dire introduire un couple mécanique sur l'arbre, peut aussi être recherché.

Le moyen d'injection d'air chaud permet d'arrêter cette machine dès qu'un court-circuit est détecté, par l'intermédiaire du moyen de détection de court-circuit. Plus précisément, dès qu'un court-circuit est détecté, le moyen d'injection d'air chaud injecte immédiatement de l'air chaud sur les aimants. Le temps d'arrêt de la machine électrique, suite à l'injection d'air chaud est inférieur à 30 secondes, de préférence inférieur à 20 secondes, de préférence encore inférieur à 10 secondes.

Le moyen d'injection d'air chaud peut comprendre en particulier au moins une canalisation dont une première extrémité est disposée dans la turbomachine, à l'endroit où l'air est prélevé, et une deuxième extrémité disposée à proximité du rotor. Par « à proximité », on comprend que la deuxième extrémité est suffisamment proche du rotor pour que les transferts de chaleur soient le plus efficace possible. En particulier, la deuxième extrémité est suffisamment proche des aimants du rotor pour que la température de l'air en sortie de la deuxième extrémité soit sensiblement égale à la température de l'air impactant le rotor, en particulier les aimants du rotor. Une distance maximale entre la deuxième extrémité et le rotor, et en particulier les aimants du rotor, est par exemple inférieure à 1 cm.

De préférence, le prélèvement de l'air chaud par le moyen d'injection d'air chaud s'effectue par l'intermédiaire du système secondaire de prélèvement d'air (dit « SAS » pour « secondary air system » en anglais) déjà présent dans la turbomachine, et/ou en rajoutant un prélèvement supplémentaire au niveau d'un étage différent de la turbomachine. Plus précisément, dans le cas d'une turbomachine double flux, un flux primaire et un flux secondaire s'étendent de l'amont vers l'aval de la turbomachine, à travers les différents étages de celle-ci, notamment les compresseurs basse pression et haute pression, la chambre de combustion, et les turbines hautes et basse pression. Le prélèvement de l'air chaud par le moyen d'injection peut être effectué dans l'un ou l'autre, voire plusieurs de ces étages. Le choix du lieu de prélèvement de l'air chaud peut être déterminé en fonction du type de machine électrique utilisé, en particulier en fonction de la température de désaimantation des aimants du rotor, ou température de Curie du matériau que comprennent les aimants. Autrement dit, il s'agit de la température à partir de laquelle les aimants perdent leurs propriétés ferromagnétiques. On comprend ainsi par « air chaud », de l'air présentant une température supérieure à la température de Curie des aimants.

Le fait de prélever de l'air chaud au niveau de la première extrémité de la canalisation du moyen d'injection, de l'acheminer par l'intermédiaire de la canalisation jusqu'à la deuxième extrémité pour l'injecter, en cas de court-circuit détecté par le moyen de détection de court-circuit, sur les aimants du rotor, permet ainsi de désaimanter celui-ci, et par conséquent désexciter la machine électrique, limitant ainsi le risque de génération de feu.

Le prélèvement de l'air froid par le moyen d'injection d'air froid peut être effectué par l'intermédiaire du système secondaire de prélèvement d'air, dit « SAS » déjà présent dans la turbomachine.

En outre, l'enceinte interne peut être une enceinte présente dans la turbomachine, et nécessitant d'être conservée à basse température, la machine électrique pouvant être disposée à l'intérieur de cette enceinte, ou à l'extérieur, mais à proximité de celle-ci, notamment adjacente à celle-ci. Lors de l'amorçage du processus d'arrêt de la machine en cas de court-circuit, en réchauffant les aimants, l'apport d'air chaud augmente la température, augmentant le risque de surchauffe au sein de l'enceinte interne. L'apport d'air froid dans celle-ci permet de prévenir cette surchauffe. Le débit et la température de l'air froid prélevé est de préférence déterminée en fonction de l'architecture de l'enceinte et de la disposition de la machine électrique par rapport à celle-ci. De préférence, la température de l'air froid prélevé par le moyen d'injection d'air froid est largement inférieure à la température de l'air chaud prélevé par le moyen d'injection d'air chaud, par exemple deux fois inférieure. La température de l'air froid peut être comprise entre -55 ° C et 150 ° C.

Par ailleurs, le fait d'utiliser de l'air chaud et de l'air froid prélevé directement dans la turbomachine, en particulier en utilisant le système de prélèvement secondaire déjà présent dans la turbomachine, permet de limiter l'encombrement et le coût du dispositif permettant l'arrêt de la machine électrique. Il n'est en outre pas nécessaire d'intégrer un dispositif supplémentaire au sein de la turbomachine, permettant d'acheminer l'air chaud et l'air froid, un tel dispositif supplémentaire pouvant apporter des problématiques non maîtrisées, et pouvant augmenter le risque de défaillances dans la turbomachine. Le prélèvement direct dans la turbomachine permet ainsi d'améliorer la fiabilité du dispositif.

Dans certains modes de réalisation, la température de l'air chaud prélevée par le moyen d'injection d'air chaud est supérieure à 250°C, de préférence supérieure à 400 ° C.

Cette température permet, en cas de court-circuit détecté, de désaimanter le rotor, de désexciter la machine électrique, et ainsi de prévenir l'apparition de feu.

Dans certains modes de réalisation, le moyen d'injection d'air chaud est configuré pour prélever l'air chaud dans le compresseur haute pression de la turbomachine.

Le fait d'effectuer un prélèvement au niveau du compresseur haute pression permet d'obtenir des températures d'air les plus élevées dans la turbomachine avant la combustion.

Dans certains modes de réalisation, le moyen d'injection d'air chaud est configuré pour prélever l'air chaud en aval de la chambre de combustion de ladite turbomachine.

Le fait d'effectuer un prélèvement en aval de la chambre de combustion permet d'obtenir de l'air chaud à des températures encore plus élevées, par exemple 1000°C, et ainsi de désaimanter des aimants présentant des températures de Curie particulièrement élevées.

Dans certains modes de réalisation, le moyen d'injection d'air chaud est configuré pour prélever l'air chaud dans le compresseur haute pression de la turbomachine et en aval de la chambre de combustion de ladite turbomachine.

Le fait de mélanger de l'air chaud prélevé en amont de la chambre de combustion, notamment dans le compresseur haute pression, et en aval de la chambre de combustion, permet de contrôler le niveau de température de l'air injecté au niveau des aimants. Cela permet une plus grande souplesse de réglage de températures, et d'adaptation du système en fonction de la machine électrique utilisée, et des propriétés des aimants qu'il comporte.

Le moyen de détection de court-circuit comprend des moyens de mesure de température fixés sur la machine et/ou des moyens de mesure et de comparaison d'impédance et/ou des moyens de mesure de courants de fuite.

De préférence, les moyens de mesure de température sont des thermocouples fixés sur le stator. Une température seuil, caractéristique d'un dysfonctionnement (qui peut être un court-circuit), peut être déterminée au préalable, notamment sur la base du type de machine électrique considéré. Ainsi, en cas de dépassement de cette valeur seuil prédéterminée, en comparant par exemple cette valeur seuil aux températures relevées par les thermocouples, l'injection d'air chaud sur les aimants du rotor, par le moyen d'injection d'air chaud, peut être effectuée.

De préférence, les moyens de mesure et de comparaison d'impédance, et les moyens de mesure de courants de fuite, sont disposés dans le contrôle-commande de la machine électrique qui est généralement intégré dans le boîtier d'électronique de puissance de la machine électrique. De même, des valeurs seuils ou des valeurs nominales peuvent être déterminées au préalable pour permettre la comparaison et la surveillance. Ainsi, en cas de dépassement de l'une ou de plusieurs de ces valeurs seuils prédéterminées, l'injection d'air chaud sur les aimants du rotor, par le moyen d'injection d'air chaud, peut être effectuée. L'utilisation de ces moyens présente l'avantage d'être simple à mettre en œuvre et à intégrer, et peu coûteuse.

Dans certains modes de réalisation, le moyen d'injection d'air chaud comprend au moins une vanne mobile entre une position fermée empêchant l'injection d'air chaud sur les aimants du rotor, et une position ouverte permettant l'injection d'air chaud sur les aimants du rotor.

La vanne permet d'injecter de l'air chaud sur les aimants uniquement en cas de détection de court-circuit. En particulier, la position fermée de la vanne permet de maintenir le niveau de température des aimants à des valeurs suffisamment basses (la limite d'utilisation peut varier entre 80 et 350°C) pour éviter une désaimantation de ces aimants et ne pas affecter leurs performances, lorsque cette désaimantation n'est pas souhaitée. En particulier, en fonctionnement nominal, la température des aimants doit bien entendu rester inférieure à la valeur limite spécifiée par le fabricant (valeur par ailleurs inférieure à la température de Curie proprement dite) à partir de laquelle des désaimantations irréversibles se produisent. L'utilisation d'une telle vanne présente l'avantage d'être simple et peu coûteuse.

Dans certains modes de réalisation, l'ensemble électrique comprend une unité de commande, le moyen de détection de court-circuit et la vanne étant connectés à l'unité de commande, l'unité de commande étant configurée pour ouvrir la vanne lorsque le moyen de détection de court-circuit détecte la présence d'un court-circuit dans la machine électrique.

L'unité de commande peut être du type ECU (pour « electronic control unit » en anglais). Une telle unité de commande permet notamment d'automatiser l'injection d'air chaud sur le rotor, en cas de détection de court-circuit par le moyen de détection. Cela permet d'améliorer l'efficacité du dispositif.

Dans certains modes de réalisation, le moyen d'injection d'air chaud comprend un circuit d'air disposé dans le stator de la machine et comprenant une pluralité de canaux configurés pour injecter l'air chaud sur les aimants du rotor.

Cela permet d'améliorer l'efficacité du dispositif, en injectant l'air chaud au plus près des aimants du rotor.

Dans certains modes de réalisation, la machine électrique est configurée pour être disposée dans l'enceinte interne, l'enceinte interne étant une enceinte pressurisée de la turbomachine comprenant de l'huile, ou une enceinte basse température. Par « enceinte basse température », on comprend une zone de la turbomachine nécessitant d'être maintenue à température basse en opération, par exemple inférieure à 140°C.

En cas d'intégration de la machine électrique dans une enceinte pressurisée comprenant de l'huile par exemple, et lors de l'amorçage du processus d'arrêt de la machine en cas de court-circuit, en réchauffant les aimants, l'apport d'air chaud augmente la température augmentant le risque de surchauffe de l'huile présente dans cette enceinte. L'apport d'air froid dans celle-ci permet de prévenir cette surchauffe de l'huile.

Dans certains modes de réalisation, le moyen d'injection d'air froid comprend au moins une vanne mobile entre une position fermée empêchant l'injection d'air froid dans l'enceinte interne, et une position ouverte permettant l'injection d'air froid dans l'enceinte interne.

La vanne est également reliée à l'unité de commande, et permet d'injecter de l'air froid dans l'enceinte interne uniquement en cas de détection de court-circuit.

Dans certains modes de réalisation, la machine électrique est une machine synchrone à aimants permanents.

Le présent exposé concerne également une turbomachine comprenant un ensemble selon l'un quelconque des modes de réalisation précédents.

Le présent exposé concerne également un procédé d'arrêt de machine électrique pour une turbomachine utilisant l'ensemble selon l'un quelconque des modes de réalisation précédents, comprenant des étapes de :
- détection de court-circuit dans la machine électrique par l'intermédiaire d'un moyen de court-circuit,
- injection sur les aimants du rotor d'air chaud à une température supérieure ou égale à la température de démagnétisation des aimants du rotor de la machine électrique, lorsqu'un court-circuit dans la machine électrique a été détecté à l'étape de détection
- injection d'air froid dans une enceinte interne de la turbomachine, lorsqu'un court-circuit dans la machine électrique a été détecté à l'étape de détection, la température de l'air froid étant inférieure à la température de l'air chaud injecté sur les aimants du rotor.

L'injection d'air froid peut être effectuée simultanément à l'injection d'air chaud lorsqu'un court-circuit est détecté, ou de manière légèrement différée, par exemple moins de dix secondes après que l'air chaud ait commencé à être injecté.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] la figure 1 est une vue en coupe longitudinale d'une turbomachine équipée d'un système d'air secondaire,
[Fig. 2] La figure 2 représente la turbomachine de la figure 1, équipée d'un ensemble électrique selon le présent exposé,
[Fig. 3] la figure 3 est une vue détaillée de la machine électrique de la turbomachine de la figure 2.
[Fig. 4] la figure 4 représente un exemple modifié du mode de réalisation de la figure 2.
[Fig. 5] la figure 5 représente les différentes étapes d'un procédé d'arrêt de machine électrique selon le présent exposé.

### Description des modes de réalisation

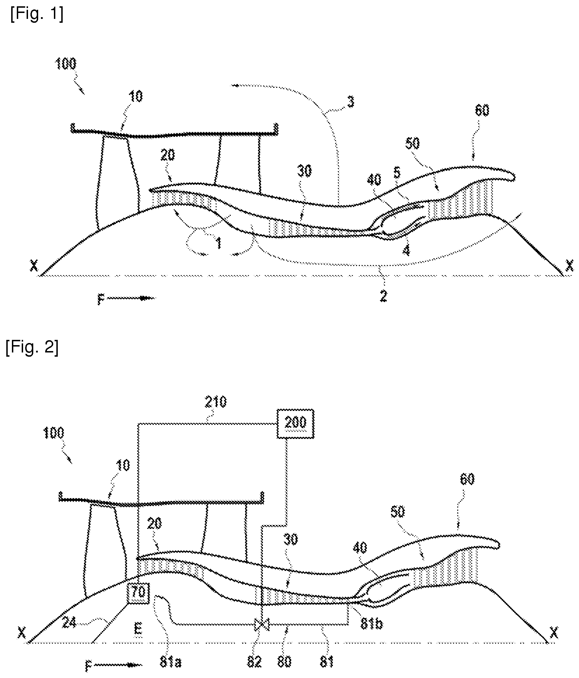

Les termes « amont » et « aval » sont par la suite définis par rapport au sens d'écoulement des gaz au travers une turbomachine, indiqué par la flèche F sur les figures 1 et 2.

La figure 1 illustre une turbomachine 100 à double flux comprenant de manière connue d'amont en aval successivement au moins une soufflante 10, une partie moteur comprenant successivement au moins un étage de compresseur basse pression 20, de compresseur haute pression 30, une chambre de combustion 40, au moins un étage de turbine haute pression 50 et de turbine basse pression 60. La turbomachine 100 est un exemple de mode de réalisation de l'invention. Le type de turbomachine (architecture et dimensions) n'est cependant pas limitatif dans le présent exposé. L'invention peut également concerner un turbomoteur ou un turbopropulseur.

Des rotors, tournant autour de l'axe principal X de la turbomachine 100 et pouvant être couplés entre eux par différents systèmes de transmission et d'engrenages, correspondent à ces différents éléments.

De manière connue, la turbomachine est équipée d'un système d'air secondaire, dans lequel plusieurs prélèvements d'air sont effectués en différents points de la turbomachine 100, plus précisément à différents étages et sur l'une des deux veines de la turbomachine double flux, en fonction des besoins. L'air prélevé en ces points étant ensuite acheminé jusqu'à un autre endroit de la turbomachine 100.

Dans l'exemple illustré sur la figuré 1, le système d'air secondaire comprend des canaux de prélèvement 1 et 2, prélevant de l'air dans le compresseur basse ou haute pression 20, 30, et permettant la pressurisation d'enceintes, un canal de prélèvement 3 dans le compresseur haute pression 30 permettant le dégivrage bec et nacelle, des canaux de prélèvement 4 et 5 en amont de la chambre de combustion 40, permettant le refroidissement de la turbine haute pression 50. Cette liste n'est pas limitative, le système d'air secondaire pouvant comporter d'autres points de prélèvement.

La figure 2 illustre la turbomachine 100 de la figure 1, équipée d'un ensemble électrique selon le présent exposé. La turbomachine 100 comprend également les différents canaux de prélèvement décrits ci-dessus, ces derniers n'étant pas représentés à nouveau sur la figure 2 par soucis de clarté.

La turbomachine 100 est équipée d'une machine électrique 70, la machine électrique 70 étant une machine synchrone à aimants permanents, disposée dans une enceinte interne E de la turbomachine. Une telle machine électrique 70 comprend un rotor 71, comprenant les aimants, et un stator 72, comprenant un bobinage en cuivre 73. Le type de machine électrique (matériau, dimensions, puissance...), et sa disposition dans la turbomachine, ne sont pas limitatifs dans le présent exposé. Dans cet exemple, l'enceinte interne E est une enceinte pressurisée en amont du compresseur basse pression 20.

Le stator 72 de la machine électrique 70 est fixé à un carter fixe 22 de la turbomachine 100. Le rotor 71 est solidaire d'un arbre tournant de la turbomachine, par exemple l'arbre basse pression, par l'intermédiaire d'un bras de liaison 24, par exemple. Le bobinage 73 présent dans le stator 72, et les aimants présents dans le rotor 71 permettent, lors de la rotation du rotor 71, de créer un courant électrique. Ce courant électrique généré peut notamment permettre d'alimenter un boitier d'électronique de puissance présent dans la turbomachine 100 (non illustré).

Un dispositif d'arrêt de la machine électrique 70 est également prévu dans la turbomachine 100. Il comprend un moyen de détection de court-circuit 210, et un moyen d'injection d'air chaud 80.

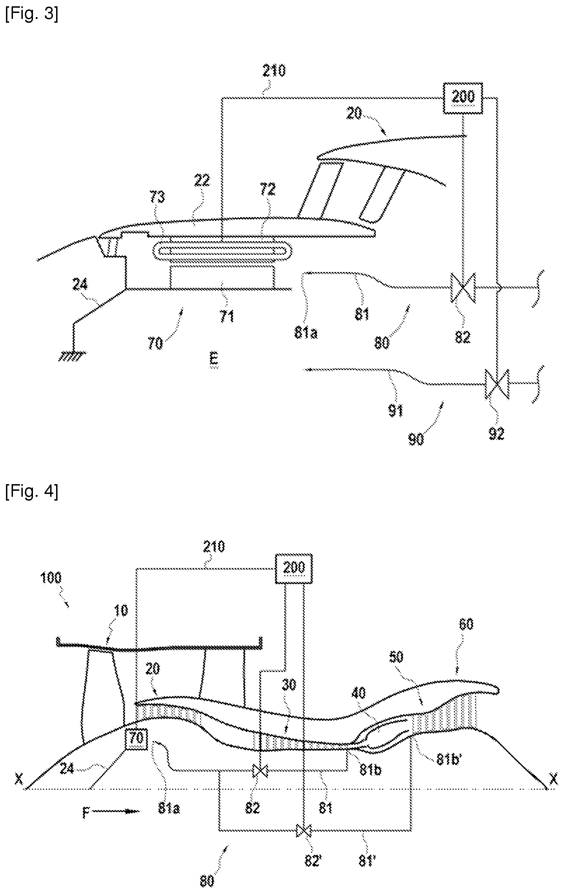

Dans cet exemple, le moyen de détection de court-circuit 210 comprend une pluralité de thermocouples disposée dans le stator 72. Un seul est représenté sur les figures 2 et 3. Ces thermocouples 210 sont connectés à une unité de calcul 200, permettant de relever les températures mesurées par les thermocouples 210 dans le stator 72. Cet exemple n'est pas limitatif, d'autres moyens de détection de court-circuit pouvant être envisagés, tels que des moyens pour mesurer d'impédance ou de courant de fuite qui peuvent être intégrés dans le boitier d'électronique de puissance.

Le moyen d'injection d'air chaud 80 comprend une ou plusieurs canalisations 81 (une seule étant représentée sur les figures 2 et 3), chacune comprenant une extrémité d'injection 81a et une extrémité de prélèvement 81b. Dans cet exemple, l'extrémité de prélèvement 81b est reliée à un étage aval du compresseur haute pression 30, de manière à être en communication fluidique avec ce dernier. Une partie des gaz s'écoulant le long du compresseur haute pression 30 peut ainsi être prélevée et s'écouler dans la canalisation 81. De manière alternative, les canalisations 81 peuvent également être connectées en dérivations d'une des canalisations du système d'air secondaire décrit précédemment. Plus précisément, en fonction de la température requise pour démagnétiser les aimants, l'air chaud peut-être obtenu avec des prélèvements au niveau des différents étages du compresseur haute pression 30, en utilisant le système d'air secondaire (SAS) déjà présent, et/ou, en rajoutant un prélèvement supplémentaire au niveau du même compresseur.

L'extrémité d'injection 81a est disposée à proximité du rotor 71 de la machine électrique 70. Par exemple, l'extrémité d'injection 81a est disposée à une distance inférieure à 1 cm du rotor 71. Plus précisément, L'extrémité d'injection 81a est disposée de manière à être en vis-à-vis du rotor 71, c'est-à-dire sensiblement à une même position selon une direction radiale, perpendiculaire à l'axe X, que le rotor 71. Ainsi, les gaz prélevés à l'extrémité de prélèvement 81b peuvent être injectés directement sur le rotor 71, en particulier sur les aimants du rotor 71. Lorsque le moyen d'injection d'air chaud 80 comprend plusieurs canalisations 81, chaque extrémité de prélèvement 81b est reliée au compresseur haute pression 30, et chaque extrémité d'injection 81a est disposée à proximité du rotor 71, en étant par exemple réparties circonférentiellement autour de l'axe de rotation du rotor 71, de manière à injecter l'air chaud sur la plus grande surface possible du rotor 71.

En outre, le moyen d'injection d'air chaud 80 comprend une vanne 82, disposée sur chaque canalisation 81. La vanne 82 peut être une électrovanne, et est connectée à l'unité de calcul 200. L'unité de calcul 200 peut commander l'ouverture ou la fermeture de la vanne 82, en fonction des valeurs mesurées par le moyen de détection de court-circuit 210. Par exemple, si les thermocouples 210 détectent au moins une température supérieure ou égale à 300 ° C, caractéristique de la présence d'un court-circuit dans la machine électrique 70, l'unité de calcul 200 commande l'ouverture de la vanne 82. L'air chaud ayant été prélevé dans le compresseur haute pression 30, et présent dans la canalisation 81 en amont de la vanne 82, peut alors s'écouler jusqu'à l'extrémité d'injection 81a, et ainsi être injecté sur les aimants disposés dans le rotor 71. Par « air chaud », on comprend que l'air prélevé dans le compresseur haute pression 30 présente une température supérieure à la température de Curie des aimants du rotor 71, permettant la démagnétisation de ces derniers.

Selon un exemple modifié du présent mode de réalisation illustré sur la figure 4, le moyen d'injection d'air chaud 80 peut comprendre des canalisations 81' connectées en dérivation des canalisations 81, comprenant une extrémité de prélèvement 81b', prélevant chacune de l'air chaud à un étage différent de la turbomachine 100. Par exemple, la première extrémité de prélèvement 81b peut être connectée au compresseur haute pression 30, en amont de la chambre de combustion 40, et la deuxième extrémité de prélèvement 81b' peut être connectée en aval de la chambre de combustion 40. Selon cette configuration, une deuxième vanne 82' est diposée sur la canalisation de dérivation 81', et est connectée à l'unité de calcul 200. Le prélèvement au niveau de deux étages différents de la turbomachine 100 permet de contrôler le niveau de température de l'air injecté sur le rotor 71. En outre, les vannes 82 et 82' peuvent être configurées pour présenter un degré d'ouverture réglable, permettant à l'unité de calcul 200 de réguler encore plus précisément la température de l'air injecté sur le rotor 71. Il est notamment possible d'injecter de l'air chaud à des températures plus élevées, permettant de démagnétiser plus efficacement certains types d'aimants. Par exemple, les aimants du rotor 71 peuvent être des aimants terres rares de type Néodyme Fer Bore (NdFeB), présentant une température de Curie de 370°C et une température maximale de fonctionnerrent entre 140 et 220 ° C. Le mélange de l'air prélevé dans le compresseur haute pression 30 et en aval de la chambre de combustion 40, présentant une température de 500°C environ, permet ainsi la démagnétisation de ces aimants du rotor 71.

Les exemples ci-dessus ne sont pas limitatifs. En particulier, des machines électriques 70 présentant des caractéristiques différentes, notamment des aimants comprenant des matériaux différents, peuvent être utilisées. Ainsi, en fonction de la machine électrique 70 utilisée, et de sa position dans la turbomachine 100, l'extrémité de prélèvement 81b peut être disposée à différents étage de la turbomachine 100, par exemple à des étages différents du compresseur haute pression 30.

En outre, selon un autre exemple modifié (non illustré) du présent mode de réalisation, l'extrémité d'injection 81a peut être disposée dans le stator 72, et déboucher radialement vers le rotor 71. Plus précisément, un circuit d'air peut être intégré dans le stator 72 de la machine électrique 70 à travers le bobinage 73, et permet d'alimenter par le biais de canaux, en air chaud, le rotor 71 et de souffler cet air sur toute la surface des aimants.

Par ailleurs, la turbomachine 100 comprend un moyen d'injection d'air froid 90 (figure 3) comprenant des canalisations 91 pouvant également être connectées en dérivations d'une des canalisations du système d'air secondaire décrit précédemment. Un tel moyen d'injection d'air froid 90 est configuré pour prélever de l'air au niveau d'un étage de la turbomachine sur lequel les gaz présentent une température plus faible que l'air prélevé par le moyen d'injection d'air chaud 80, par exemple le compresseur basse pression 20. L'air froid ainsi prélevé peut être injecté dans l'enceinte pressurisée E dans laquelle est disposée la machine électrique 70. Plus précisément, en cas de court-circuit détecté, l'unité de calcul 200 commande l'ouverture de la vanne 82 et/ou de la vanne 82', et également d'une vanne 92 disposée sur la canalisation 91 du moyen d'injection d'air froid 90. Ainsi, parallèlement à l'injection d'air chaud sur les aimants du rotor 71, permettant la démagnétisation des aimants, l'air froid injecté dans l'enceinte pressurisée E permet d'éviter une augmentation excessive de la température de l'huile présente dans celle-ci.

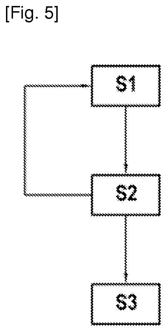

Un procédé d'arrêt de la machine électrique pour une turbomachine va être décrit dans la suite de la description, en référence à la figure 5.

Le moyen de détection de court-circuit 210, par exemple les thermocouples, mesurent en continu la température dans la machine 70 (étape S1). Les températures relevées sont transmises à l'unité de calcul 200. L'unité de calcul 200 compare ces températures avec une température seuil prédéterminée, caractéristique d'un court-circuit (étape S2). Si, à l'étape S2, l'unité de calcul 200 détermine que les températures sont inférieures à la température seuil prédéterminée, le procédé retourne à l'étape S1. Si, à l'étape S2, l'unité de calcul 200 détermine qu'au moins une des températures est supérieure ou égale à la température seuil prédéterminée, le procédé passe à l'étape S3. La détection de court-circuit comprend donc l'étape S1 de mesure, et l'étape S2 de comparaison. A l'étape S3, l'unité de calcul 200 commande l'ouverture de la vanne 82 et/ou de la vanne 82', et de la vanne 92 du moyen d'injection d'air froid 90 lorsque la machine 70 est disposée dans une enceinte pressurisée E avec de l'huile ou dans une enceinte basse température, c'est-à-dire une zone qu'il faut maintenir à basse température. L'air chaud peut ainsi être injecté sur les aimants du rotor 71, permettant la démagnétisation de ces derniers, limitant ainsi le risque de génération de feu, tout en limitant le risque de surchauffe de l'huile présente dans cette enceinte.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. Par exemple, si l'architecture de la turbomachine ne permet pas un prélèvement d'air au bon niveau de température avant la chambre de combustion, l'air prélevé peut être surchauffé davantage, afin d'atteindre la bonne température requise, en utilisant un échangeur intégré en aval de la chambre de combustion (pour utiliser les calories d'échappement) ou par tout autre procédé de surchauffe, notamment électrique. Par ailleurs, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Turbomachine aéronautique comprenant un ensemble électrique, l'ensemble électrique comprenant :
- une machine électrique (70) disposée dans la turbomachine (100), et comprenant un stator (72) et un rotor (71), le rotor (71) étant solidaire en rotation d'un arbre de la turbomachine (100), et comprenant des aimants,
- un moyen de détection de court-circuit (210) configuré pour détecter la présence d'un court-circuit dans la machine électrique (70), le moyen de détection de court-circuit (210) comprenant des moyens de mesure de température fixés sur la machine (70) et/ou des moyens de mesure et de comparaison d'impédance et/ou des moyens de mesure de courants de fuite,
- un moyen d'injection d'air chaud (80) configuré pour prélever, dans la turbomachine, de l'air chaud à une température supérieure à la température de démagnétisation des aimants du rotor (71), et pour injecter l'air chaud prélevé sur les aimants dudit rotor (71) lorsque le moyen de détection de court-circuit (210) détecte la présence d'un court-circuit dans la machine électrique (70), et
- un moyen d'injection d'air froid (90), configuré pour prélever de l'air froid dans la turbomachine (100) et pour l'injecter dans une enceinte interne (E) de la turbomachine lorsque le moyen de détection de court-circuit (210) détecte la présence d'un court-circuit dans la machine électrique (70), la température de l'air froid prélevé par le moyen d'injection d'air froid (90) étant inférieure à la température de l'air chaud prélevé par le moyen d'injection d'air chaud (80).

2. Turbomachine selon la revendication 1, dans laquelle la température de l'air chaud prélevé par le moyen d'injection d'air chaud (80) est supérieure à 250°C, de préférence supérieure à 400°C.

3. Turbomachine selon la revendication 1 ou 2, dans lequel le moyen d'injection d'air chaud (80) est configuré pour prélever l'air chaud dans un compresseur haute pression (30) de la turbomachine et/ou en aval d'une chambre de combustion (40) de ladite turbomachine (100).

4. Turbomachine selon l'une quelconque des revendications 1 à 3, dans lequel le moyen d'injection d'air chaud (80) comprend au moins une vanne (82) mobile entre une position fermée empêchant l'injection d'air chaud sur les aimants du rotor (71), et une position ouverte permettant l'injection d'air chaud sur les aimants rotor (71).

5. Turbomachine selon l'une quelconque des revendications 1 à 4, comprenant une unité de commande (200), le moyen de détection de court-circuit (210) et la vanne (82) étant connectés à l'unité de commande (200), l'unité de commande (200) étant configurée pour ouvrir la vanne (82) lorsque le moyen de détection de court-circuit (210) détecte la présence d'un court-circuit dans la machine électrique (70).

6. Turbomachine selon l'une quelconque des revendications 1 à 5, dans lequel la machine électrique (70) est disposée dans l'enceinte interne (E), l'enceinte interne (E) étant une enceinte pressurisée de la turbomachine comprenant de l'huile ou une enceinte basse température.

7. Turbomachine selon l'une quelconque des revendications 1 à 6, dans lequel la machine électrique (70) est une machine synchrone à aimants permanents.

8. Procédé d'arrêt de machine électrique pour une turbomachine (100) selon l'une quelconque des revendications 1 à 7, le procédé comprenant des étapes de :
- détection de court-circuit dans la machine électrique (70) par l'intermédiaire d'un moyen de détection de court-circuit (210),
- injection sur les aimants du rotor (71) d'air chaud à une température supérieure ou égale à la température de démagnétisation des aimants du rotor (71) de la machine électrique (70), lorsqu'un court-circuit dans la machine électrique (70) a été détecté à l'étape de détection,
- injection d'air froid dans une enceinte interne (E) de la turbomachine, lorsqu'un court-circuit dans la machine électrique (70) a été détecté à l'étape de détection, la température de l'air froid étant inférieure à la température de l'air chaud injecté sur les aimants du rotor (71).

## Patentansprüche

1. Luftfahrtturbomaschine, umfassend eine elektrische Anordnung, die elektrische Anordnung umfassend:
- eine elektrische Maschine (70), die in der Turbomaschine (100) angeordnet ist und einen Stator (72) und einen Rotor (71) umfasst, wobei der Rotor (71) drehfest mit einer Welle der Turbomaschine (100) verbunden ist und Magnete umfasst,
- eine Kurzschlusserkennungseinrichtung (210), die konfiguriert ist, um das Vorhandensein eines Kurzschlusses in der elektrischen Maschine (70) zu erkennen, wobei die Kurzschlusserkennungseinrichtung (210) Temperaturmesseinrichtungen, die an der Maschine (70) befestigt sind, und/oder Einrichtungen zum Messen und Vergleichen der Impedanz und/oder Einrichtungen zum Messen von Leckströmen umfasst,
- eine Heißlufteinblaseeinrichtung (80), die konfiguriert ist, um aus der Turbomaschine heiße Luft mit einer Temperatur, die höher ist als die Entmagnetisierungstemperatur der Magnete des Rotors (71), zu entnehmen und die entnommene heiße Luft auf die Magnete des genannten Rotors (71) einzublasen, wenn die Kurzschlusserkennungseinrichtung (210) das Vorhandensein eines Kurzschlusses in der elektrischen Maschine (70) erkennt, und
- eine Kaltlufteinblaseeinrichtung (90), die konfiguriert ist, um kalte Luft aus der Turbomaschine (100) zu entnehmen und sie in einen Innenraum (E) der Turbomaschine einzublasen, wenn die Kurzschlusserkennungseinrichtung (210) das Vorhandensein eines Kurzschlusses in der elektrischen Maschine (70) erkennt, wobei die Temperatur der von der Kaltlufteinblaseeinrichtung (90) entnommenen kalten Luft niedriger ist als die Temperatur der von der Heißlufteinblaseeinrichtung (80) entnommenen heißen Luft.

2. Turbomaschine nach Anspruch 1, wobei die Temperatur der von der Heißlufteinblaseeinrichtung (80) entnommenen heißen Luft höher als 250 °C, vorzugsweise höher als 400 °C ist.

3. Turbomaschine nach Anspruch 1 oder 2, wobei die Heißlufteinblaseeinrichtung (80) konfiguriert ist, um die heiße Luft in einem Hochdruckverdichter (30) der Turbomaschine und/oder stromabwärts von einer Brennkammer (40) der Turbomaschine (100) zu entnehmen.

4. Turbomaschine nach einem der Ansprüche 1 bis 3, wobei die Heißlufteinblaseeinrichtung (80) mindestens ein Ventil (82) umfasst, das zwischen einer geschlossenen Position, in der das Einblasen von heißer Luft auf die Magnete des Rotors (71) verhindert wird, und einer offenen Position, in der das Einblasen von heißer Luft auf die Magnete des Rotors (71) ermöglicht wird, bewegbar ist.

5. Turbomaschine nach einem der Ansprüche 1 bis 4, umfassend eine Steuereinheit (200), wobei die Kurzschlusserkennungseinrichtung (210) und das Ventil (82) mit der Steuereinheit (200) verbunden sind, wobei die Steuereinheit (200) konfiguriert ist, um das Ventil (82) zu öffnen, wenn die Kurzschlusserkennungseinrichtung (210) das Vorhandensein eines Kurzschlusses in der elektrischen Maschine (70) erkennt.

6. Turbomaschine nach einem der Ansprüche 1 bis 5, wobei die elektrische Maschine (70) in dem Innenraum (E) angeordnet ist, wobei der Innenraum (E) ein druckbeaufschlagter Raum der Turbomaschine ist, der Öl enthält, oder ein Niedertemperaturraum ist.

7. Turbomaschine nach einem der Ansprüche 1 bis 6, wobei die elektrische Maschine (70) eine Synchronmaschine mit Permanentmagneten ist.

8. Verfahren zum Abschalten einer elektrischen Maschine für eine Turbomaschine (100) nach einem der Ansprüche 1 bis 7, das Verfahren umfassend folgende Schritte:
- Erkennung eines Kurzschlusses in der elektrischen Maschine (70) mittels einer Kurzschlusserkennungseinrichtung (210),
- Einblasen von heißer Luft auf die Magnete des Rotors (71) mit einer Temperatur, die gleich wie oder höher als die Entmagnetisierungstemperatur der Magnete des Rotors (71) der elektrischen Maschine (70) ist, wenn bei dem Erkennungsschritt ein Kurzschluss in der elektrischen Maschine (70) erkannt wurde,
- Einblasen von kalter Luft in einen Innenraum (E) der Turbomaschine, wenn bei dem Erkennungsschritt ein Kurzschluss in der elektrischen Maschine (70) erkannt wurde, wobei die Temperatur der kalten Luft niedriger ist als die Temperatur der auf die Magnete des Rotors (71) eingeblasenen heißen Luft.

## Claims

1. Aeronautical turbomachine comprising an electrical assembly, the electrical assembly comprising:
- an electric machine (70) disposed in the turbomachine (100), and comprising a stator (72) and a rotor (71), the rotor (71) being rotationally secured to a shaft of the turbomachine (100), and comprising magnets,
- a short-circuit detection means (210) configured to detect the presence of a short-circuit in the electric machine (70), the short-circuit detection means (210) comprising temperature measurement means affixed to the machine (70) and/or impedance measurement and comparison means and/or leakage current measurement means,
- a hot air injection means (80) configured to draw hot air off the turbomachine at a temperature greater than the temperature of demagnetization of the magnets of the rotor (71), and to inject the drawn hot air onto the magnets of said rotor (71) when the short-circuit detection means (210) detects the presence of a short-circuit in the electric machine (70), and
- a cool air injection means (90), configured to draw cool air off the turbomachine (100) and to inject it into an inner chamber (E) of the turbomachine when the short-circuit detection means (210) detects the presence of a short-circuit in the electric machine (70), the temperature of the cool air drawn by the cool air injection means (90) being less than the temperature of the hot air drawn by the hot air injection means (80).

2. The turbomachine as claimed in claim 1, wherein the temperature of the hot air drawn by the hot air injection means (80) is greater than 250°C, and preferably greater than 400°C.

3. The turbomachine as claimed in claim 1 or 2, wherein the hot air injection means (80) is configured to draw hot air off a high-pressure compressor (30) of the turbomachine and/or downstream of a combustion chamber (40) of said turbomachine (100).

4. The turbomachine as claimed in any of claims 1 to 3, wherein the hot air injection means (80) comprises at least one valve (82) movable between a closed position preventing the injection of hot air onto the magnets of the rotor (71), and an open position allowing the injection of hot air onto the magnets of the rotor (71).

5. The turbomachine as claimed in any of claims 1 to 4, comprising a control unit (200), the short-circuit detection means (210) and the valve (82) being connected to the control unit (200), the control unit (200) being configured to open the valve (82) when the short-circuit detection means (210) detects the presence of a short-circuit in the electric machine (70).

6. The turbomachine as claimed in any of claims 1 to 5, wherein the electric machine (70) is configured to be disposed in the inner chamber (E), the inner chamber (E) being a pressurized chamber of the turbomachine comprising oil or a low-temperature chamber.

7. The turbomachine as claimed in any of claims 1 to 6, wherein the electrical machine (70) is a permanent-magnet synchronous system.

8. A method for stopping an electric machine for a turbomachine (100) as claimed in any of claims 1 to 7, the method comprising steps of:
- detecting a short-circuit in the electric machine (70) by way of a short-circuit detection means (210),
- injecting onto the magnets of the rotor (71) hot air at a temperature greater than or equal to the demagnetization temperature of the magnets of the rotor (71) of the electric machine (70), when a short-circuit in the electric machine (70) has been detected in the detecting step,
- injecting cool air into an inner chamber (E) of the turbomachine, when a short-circuit in the electric machine (70) has been detected in the detecting step, the temperature of the cool air being less than the temperature of the hot air injected onto the magnets of the rotor (71).
